# EUROPÄISCHE PATENTSCHRIFT

(11) **EP 1 724 969 B1**
(45) Veröffentlichungstag und Bekanntmachung des Hinweises auf die Patenterteilung: **27.06.2007**
(21) Anmeldenummer: 06008592.5
(22) Anmeldetag: 26.04.2006
(51) Int. Cl.: H04L 12/40

(54) **Integration von Feldgeräten in ein Automatisierungssystem**
Integration of field devices in an automation system
Intégration de dispositifs de terrain dans un système d'automation

(30) Priorität: 20.05.2005 DE 102005023938
(43) Veröffentlichungstag der Anmeldung: 22.11.2006
(73) Patentinhaber: ABB PATENT GmbH, 68526 Ladenburg (DE)
(72) Erfinder: Dien, Brigitte, 64658 Fürth (DE); Röttger, Andreas, 32427 Minden (DE); Krumrey, Olaf, 31737 Rinteln (DE); Garrels, Kai, Dipl.-Ing., 68239 Mannheim (DE)
(74) Vertreter: Miller, Toivo

(56) Entgegenhaltungen:
- US-A- 5 552 776
- US-A1- 2004 016 244
- US-A1- 2005 085 928

## Beschreibung

Die Erfindung betrifft ein System zur Integration von Feldgeräten, insbesondere Motorschutz- und Steuergeräten, Frequenzumrichtem, Druck- und Temperaturmessumformern, Durchflussmessern und Stellungsreglern, in ein Automatisierungssystem mit mehreren über eine Kommunikationsverbindung verbundenen Feldgeräten zur Steuerung und Überwachung einer technischen Anlage oder eines technischen Prozesses. Außerdem bezieht sich die Erfindung auf ein Verfahren zum Betreiben eines solchen Systems.

Zur Parametrierung und Konfigurierung von Feldgeräten werden üblicherweise PCbasierte Programme, auch als Engineering Tools bezeichnet, verwendet. Das Engineering Tool, welches beispielsweise als "Master Klasse 2 " ausgeführt ist, kommuniziert mit dem Feldgerät über eine Standardschnittstelle, welche von einem eigenständigen Werkzeug, dem Field Device Tool (FDT), bereitgestellt wird.

Die Patentschrift US-2004/016244 offenbart ein Verfahren zur Überwachung und Diagnose eines Automatisierungssystems mittels einer über ein Feldbussystem angeschlossenen zentralen Kontrolleinrichtung.

Die Datenübertragung der am Feldgerät einzustellenden Parameter mittels des Engineering Tools ist Vorraussetzung für die Anpassung des jeweiligen Feldgerätes an den technischen Prozess oder an die technische Anlage des Automatisierungssystems. Die dazu verwendete Parametriersoftware wird dabei azyklisch in das Feldgerät übertragen. Beispielsweise greift die Parametriersoftware mit dem als PROFIBUS DP-Master Klasse 2 bezeichneten Engineering Tool über ihre azyklischen Dienste auf das Feldgerät zu.

Der Zugriff der übergeordneten Steuerung auf die Feldgeräte des Automatisierungssystems, welches insbesondere als speicherprogrammierbares Steuersystem (SPS) oder Prozessleitsystem ausgeführt ist, erfolgt über zyklische Dienste, beispielsweise mittels des PROFIBUS DP-Master Klasse 1-Tools. Dabei tauscht jedes Feldgerät über eine als Bus ausgeführte Kommunikationsverbindung Ein- und Ausgabedaten, wie Meldungen, Befehle und Diagnosedaten, in einer festgelegten Zykluszeit mit der übergeordneten Steuerung aus.

Da der azyklische Kommunikationskanal zwischen dem Engineering Tool und den daran angeschlossenen Feldgeräten völlig unabhängig von der zyklischen Datenübertragung zwischen den Feldgeräten und der übergeordneten Steuerung arbeitet, stehen die mit der übergeordneten Steuerung ausgetauschten zyklischen Meldungen und Befehle für die Inbetriebnahme-, Parametrierungs- und Überwachungsfunktionen der Parametriersoftware der Feldgeräte nicht zur Verfügung. Somit kann die Parametriersoftware zwar das entsprechende Feldgerät parametrieren und konfigurieren, ist jedoch nicht in der Lage das Feldgerät zu bedienen und zu beobachten.

Auch die Diagnosedaten des Feldgerätes stehen auf dem azyklischen Kommunikationskanal nicht zur Verfügung.

Ausgehend von den beschriebenen Nachteilen liegt der Erfindung die Aufgabe zugrunde, auch bei einem Ausfall des zyklischen Datenaustausches der Feldgeräte mit der übergeordneten Steuerung das jeweilige Feldgerät bedienen und beobachten zu können, indem Meldungen und Befehle der übergeordneten Steuerung weiterhin verarbeitet werden.

Diese Aufgabe wird erfindungsgemäß durch ein System zur Integration von Feldgeräten der eingangs genannten Art mit den im Anspruch 1 angegebenen Merkmalen gelöst. Vorteilhafte Ausgestaltungen, Verbesserungen des erfindungsgemäßen Systems sowie ein Verfahren zur Ausführung des Systems sind in weiteren Ansprüchen und in der Beschreibung angegeben.

Das erfindungsgemäße System zur Integration von Feldgeräten, wie beispielsweise Motorschutz- und Steuergeräten, Frequenzumrichtern, Druck- und Temperaturmessumformern, Durchflussmessern und Stellungsreglern, in ein Automatisierungssystem umfasst mehrere über eine vorzugsweise als Bus ausgeführte Kommunikationsverbindung verbundener Feldgeräte zur Steuerung und Überwachung einer technischen Anlage, wobei die Feldgeräte über jeweils eine Feldbusanschaltung mit wenigstens einer übergeordneten Steuerung verbunden sind. Die übergeordnete Steuerung stellt Befehle, Meldungen und/oder Diagnosedaten einem in der jeweiligen Feldbusanschaltung vorhandenen Mikrocontroller zyklisch bereit. Eine Parametriersoftware ist zur Konfigurierung und/oder Parametrierung des jeweiligen Feldgerätes vorgesehen, wobei die azyklisch übertragenen Daten der Parametriersoftware in einem dafür vorgesehenen Speicherabschnitt des Mikrocontrollers abgelegt sind.

Die übergeordnete Steuerung ist vorzugsweise als speicherprogrammierbare Steuerung (SPS) oder Prozessleitsystem (PLS) zur Verwaltung, Bedienung, Beobachtung und/oder Diagnose der technischen Anlage ausgeführt.

Erfindungsgemäß ist die Feldbusanschaltung des jeweiligen Feldgerätes dafür vorgesehen, mittels einer Datenspiegelung die Befehle, Meldungen und/oder Diagnosedaten der übergeordneten Steuerung in den für die Daten der Parametriersoftware vorgesehenen Speicherabschnitt des Mikrocontrollers zu übertragen.

Der Datenaustausch zwischen dem Feldgerät und der Feldbusanschaltung wird über dafür vorgesehene Schnittstellen ausgeführt.

Somit sind die im vorgesehenen Speicherabschnitt des Mikrocontrollers gespiegelten Befehle, Meldungen und/oder Diagnosedaten der übergeordneten Steuerung für eine Beobachtung, Bedienung und/oder Diagnose des Feldgerätes mittels der Parametriersoftware verfügbar.

Zur Konfiguration und/oder Parametrierung des Feldgerätes mittels der Parametriersoftware ist ein Engineering Tool vorgesehen, welches in vorteilhafter Weise unter Berücksichtigung der gespiegelten Befehle, Meldungen und/oder Diagnosedaten der übergeordneten Steuerung eine Bedienung und Beobachtung des Feldgerätes ermöglicht.

Ein weiterer Vorteil der Erfindung ist darin zu sehen, dass auch die Abfrage der Diagnosedaten des Feldgerätes dem azyklischen Kanal bereitgestellt werden.

In einer vorteilhaften Weiterbildung des erfindungsgemäßen Systems ist vorgesehen, dass die übergeordneten Steuerung und/oder die Parametriersoftware Freigabebefehle zur Abfrage der Meldungen und/oder Diagnosedaten des Feldgerätes bereitstellen.

Das Verfahren mit dem die Aufgabe weiterhin gelöst wird, ist dem Anspruch 10 zu entnehmen. Dabei werden mittels wenigstens einer übergeordneten Steuerung Befehle, Meldungen und/oder Diagnosedaten einem in der Feldbusanschaltung des jeweiligen Feldgerätes vorhandenen Mikrocontroller zyklisch bereitstellt, mittels wenigstens einer Parametriersoftware das jeweilige Feldgerät konfiguriert und/oder parametriert und dabei die azyklisch übertragenen Daten der Parametriersoftware in einem dafür vorgesehenen Speicherabschnitt des Mikrocontrollers abgelegt.

Erfindungsgemäß werden mittels einer Datenspiegelung die Befehle, Meldungen und/oder Diagnosedaten der übergeordneten Steuerung in den für die Daten der Parametriersoftware vorgesehenen Speicherabschnitt des Mikrocontrollers übertragen, wodurch der Parametriersoftware die Fähigkeit zur Beobachtung und Bedienung des Feldgerätes bereitgestellt wird.

Anhand der in den folgenden Figuren dargestellten Ausführungsbeispiele sollen die Erfindung sowie vorteilhafte Ausgestaltungen, Verbesserungen und weitere Vorteile der Erfindung näher erläutert und beschrieben werden.

Es zeigen:
- **Fig. 1**: eine Ausführungsform eines erfindungsgemäßen Systems zur Integration von Feldgeräten in ein Automatisierungssystem, und
- **Fig. 2**: eine detaillierte Ausführungsform des erfindungsgemäßen Systems zur Parametrierung, Konfigurierung, Bedienung und Beobachtung eines Feldgerätes.

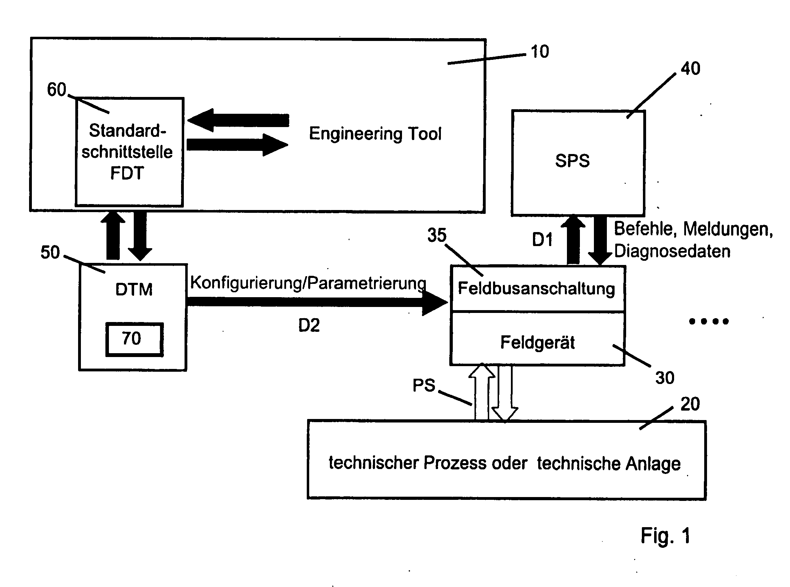

**Fig. 1** zeigt eine Ausführungsform eines erfindungsgemäßen Systems zur Integration von Feldgeräten 30 in ein als Prozessleitsystem oder ein speicherprogrammierbares Steuerungssystem ausgeführtes Automatisierungssystem mit mehreren über eine nicht dargestellte Kommunikationsverbindung verbundenen Feldgeräten 30 zur Steuerung und Überwachung einer technischen Anlage 20. Die Kommunikationsverbindung zwischen den Feldgeräten ist als Feldbus, vorzugsweise als PROFIBUS oder ETHERNET ausgeführt.

Das Feldgerät 30 umfasst hier eine, als Feldbusstecker ausgeführte, Feldbusanschaltung 35 zur Kommunikation des Feldgerätes 30 mit einer speicherprogrammierbaren Steuerung 40.

Zur Verwaltung, Konfiguration, Parametrierung, Bedienung, Beobachtung, Wartung und/oder Diagnose der technischen Anlage 20 ist ein Engineering Tool 10 vorgesehen, welches ebenfalls über den Feldbusstecker 35 mit dem Feldgerät 30 kommuniziert.

Das Engineering Tool 10 zur Konfiguration und Parametrierung des Feldgerätes 30 ist als Master für Steuerungs-/ Inbetriebnahme und Projektierungsaufgaben, auch als Master Klasse 2 bezeichnet, ausgeführt.

Der Informationsaustausch der technischen Anlage 20 mit dem Automatisierungssystem wird mittels der über die Feldgeräte 30 übertragenen Prozesssignale PS realisiert.

Die nachfolgend beschriebene Ausführungsform des erfindungsgemäßen Systems bezieht sich beispielhaft auf die Integration eines Feldgerätes 30 in das Automatisierungssystem.

Die speicherprogrammierbare Steuerung 40 zur Verwaltung, Bedienung, Beobachtung und/oder Diagnose der technischen Anlage 20 tauscht zyklisch Daten D1 mit dem Feldgerät 30 über dessen Feldbusstecker 35 aus, wobei die ausgetauschten Daten D1 Befehle, Meldungen und/oder Diagnosedaten sind. Für den Datenaustausch und die Verarbeitung der zyklisch mit der speicherprogrammierbaren Steuerung 40 ausgetauschten Daten D1 ist ein im Feldbusstecker 35 vorhandener Mikrocontroller vorgesehen.

Die Kommunikation der speicherprogrammierbaren Steuerung 40 mit dem Feldgerät 30 wird mittels eines Feldbusprotokolls, beispielsweise dem PROFIBUS, ausgeführt.

Das Engineering Tool 10 kommuniziert über eine Standardschnittstelle 60, dem Field Device Tool, über den Feldbusstecker 35 mit dem Feldgerät 30.

Zur Konfigurierung und Parametrierung des jeweiligen Feldgerätes 30 ist als Parametriersoftware 70 die Softwarekomponente Device Type Manager DTM vorgesehen, welche über eine als Field Device Tool FDT ausgeführten Standardschnittstelle die Kommunikation des Engineering Tools 10 mit dem Feldgerät 30 ausführt.

Die im Device Type Manager 50 befindliche Parametriersoftware 70 ermöglicht eine Konfigurierung und Parametrierung des Feldgerätes 30, indem die azyklisch übertragenen Daten D2 der Parametriersoftware im Mikrocontroller des Feldbussteckers 35 abgelegt werden.

Durch die Nutzung der Bedienoberflächen des Device Type Managers 50 und der vom Field Device Tool FDT bereitgestellten Kommunikationswege nicht nur für die Konfigurierung und Parametrierung der Feldgeräte 30, sondern auch für ihre Bedienung und Beobachtung unter Berücksichtigung der mit der speicherprogrammierbaren Steuerung 40 ausgetauschten Daten D1, ist jederzeit eine Abfrage von Meldungen des Feldgerätes 30 durchführbar.

Zur Konfigurierung und Parametrierung des jeweiligen Feldgerätes 30 ist alternativ auch eine, vorzugsweise als Textdatei ausgeführte Gerätebeschreibung, die Electronic Device Description (EDD) vorgesehen, welche über eine als EDD- Interpreter ausgeführte offene Schnittstelle die Kommunikation des Engineering Tools 10 mit dem Feldgerät 30 ausführt. Der Einsatz der EDD-Datei ist insbesondere für Feldgeräte 30 mittlerer Komplexität vorgesehen.

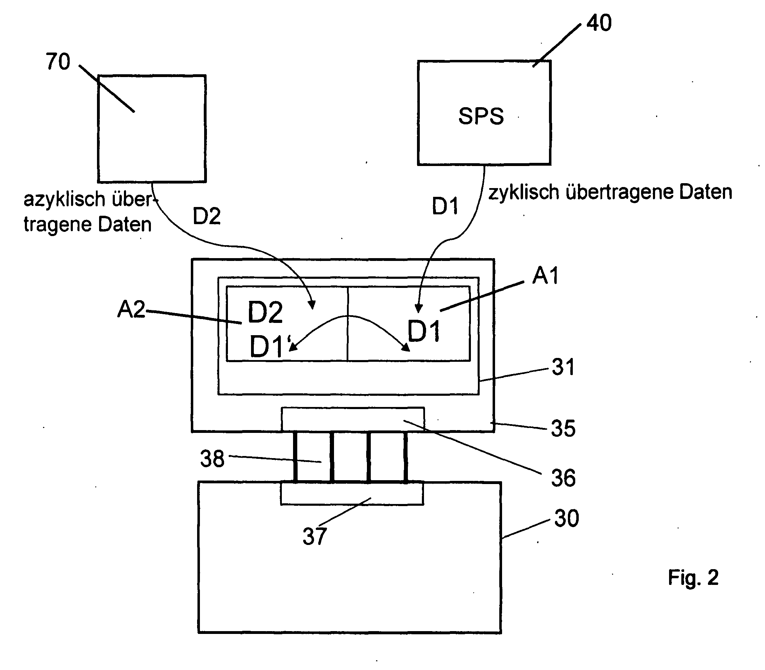

**Fig. 2** zeigt in einer detaillierte Ausführungsform des erfindungsgemäßen Systems zur Parametrierung, Konfigurierung, Bedienung und Beobachtung eines Feldgerätes 30, wie die Parametriersoftware 70 zur Beobachtung und Bedienung des Feldgerätes 30 auf die zyklisch mit der SPS ausgetauschten Daten D1 zugreift, wobei der Feldbusstecker 35 und das Feldgerät 30 über dafür vorgesehenen Schnittstellen 36, 37 miteinander kommunizieren.

Der Feldbusstecker 35 ist dafür vorgesehen, mittels des im Feldbusstecker 35 integrierten Mikrocontrollers 31 eine Signalanpassung der über die Kommunikationsverbindung auszutauschenden Signale D1 zwischen dem Feldgerät 30 und der übergeordneten Steuerung 40, eine Aktivierung/Deaktivierung des Feldgerätes 30 und/oder eine Einstellung von spezifischen Parametern des Feldgerätes 30 auszuführen.

Die azyklisch übertragenen Daten D2 der Parametriersoftware 70 werden in einem dafür vorgesehenen Speicherabschnitt A2 im Mikrocontroller 31 des Feldbussteckers 35 abgelegt.

Mittels einer Datenspiegelung werden die Befehle, Meldungen und/oder Diagnosedaten D1 der übergeordneten Steuerung 40 aus dem ersten Speicherabschnitt A1 des Mikrocontrollers 31 in den für die Daten der Parametriersoftware D2 vorgesehenen zweiten zweiten Speicherabschnitt A2 des Mikrocontrollers 31 übertragen und stehen als Abbild D1' für einen Zugriff der Parametriersoftware 70 zur Verfügung.

Der im Feldbusstecker 35 integrierte Mikrocontroller 31 ist dafür eingerichtet, mittels einer Datenspiegelung die Befehle, Meldungen und/oder Diagnosedaten D1 der übergeordneten Steuerung 40 als Abbild D1' aus dem ersten Speicherabschnitt A1 des Mikrocontrollers 31 in den für die Daten der Parametriersoftware D2 vorgesehenen zweiten Speicherabschnitt A2 des Mikrocontrollers 31 zu übertragen, wobei Befehle, ivieidungen und/oder Diagnosedaten D1 der übergeordneten Steuerung 40 als Abbild D1' für einen Zugriff der Parametriersoftware 70 vorhanden sind.

Somit stehen die im zweiten Speicherabschnitt A2 des Mikrocontrollers 31 abgelegten Befehle, Meldungen und/oder Diagnosedaten D1, die zyklisch mit der übergeordneten Steuerung 40 ausgetauscht werden, für eine Beobachtung, Bedienung und/oder Diagnose des Feldgerätes 30 mittels der Parametriersoftware 70 zur Verfügung. Da die Funktion der Datenspiegelung direkt im Feldbusstecker 35 ausgeführt wird, sind Änderungen am Feldgerät 30 nicht notwendig.

## Patentansprüche

1. System zur Integration von Feldgeräten (30) in ein Automatisierungssystem mit mehreren über eine Kommunikationsverbindung verbundenen Feldgeräten (30) zur Steuerung und Überwachung einer technischen Anlage (20), wobei
- die Feldgeräte über jeweils eine Feldbusanschaltung (35) mit wenigstens einer übergeordneten Steuerung (40) verbunden sind,
- die übergeordnete Steuerung konfiguriert ist (40) Befehle, Meldungen und/oder Diagnosedaten (D1) einem in der jeweiligen Feldbusanschaltung (35) vorhandenern Mikrocontroller (31) zyklisch, bereitzustellen und
- wenigstens eine Parametriersoftware (70) zur Konfigurierung und/oder Parametrierung des jeweiligen Feldgerätes (30) dafür konfiguriert ist die azyklischen übertragenen Daten (D2) der Parametriersoftware in einem dafür vorgesehenen Speicherabschnitt (A2) des Mikrocontrollers (31) abzulegen,
und dass die Feldbusanschaltung (35) des jeweiligen Feldgerätes (30) dafür vorgesehen ist, mittels einer Datenspiegelung die Befehle, Meldungen und/oder Diagnosedaten (D1) der übergeordneten Steuerung (40) in den für die Daten der Parametriersoftware (D2) vorgesehenen Speicherabschnitt (A2) des Mikrocontrollers (31) zu übertragen.

2. System nach Anspruch 1, **dadurch gekennzeichnet, dass** die im Speicherabschnitt (A2) des Mikrocontrollers (31) abgelegten Befehle, Meldungen und/oder Diagnosedaten (D1) der übergeordneten Steuerung (40) für eine Beobachtung, Bedienung und/oder Diagnose des Feldgerätes (30) mittels der Parametriersoftware (70) vorgesehen sind.

3. System nach Anspruch 1 oder 2, **dadurch gekennzeichnet, dass** die übergeordnete Steuerung (40) als speicherprogrammierbares Steuerungssystem oder Prozessleitsystem ausgeführt ist.

4. System nach einem der vorherigen Ansprüche, **dadurch gekennzeichnet, dass** jederzeit eine Abfrage der Meldungen und/oder Diagnosedateri (D1) des Feldgerätes (30) vorgesehen ist.

5. System nach einem der vorherigen Ansprüche, **dadurch gekennzeichnet, dass** die übergeordnete Steuerung (40) und/oder die Parametriersoftware (70) Freigabebefehle zur Abfrage der Meldungen und/oder Diagnosedaten (D1) des Feldgerätes (30) bereitstellen.

6. System nach einem der vorherigen Ansprüche, **dadurch gekennzeichnet, dass** die Kommunikation der übergeordneten Steuerung (40) mit dem Feldgerät (30) mittels eines Feldbusprotokolls, insbesondere dem PROFIBUS oder dem ETHERNET, ausführbar ist.

7. System nach einem der vorherigen Ansprüche, **dadurch gekennzeichnet, dass** zur Konfiguration und/oder Parametrierung des Feldgerätes (30) ein Engineering Tool (10) vorgesehen ist, welches insbesondere als Master Klasse 2 ausgeführt ist.

8. System nach Anspruch 7, **dadurch gekennzeichnet, dass** zur Konfigurierung und/oder Parametrierung des Feldgerätes (30) mittels des Engineering Tools (10) als Parametriersoftware (70) die Softwarekomponente Device Type Manager (DTM) vorgesehen ist, welche über eine als Field Device Tool (FDT) ausgeführten Standardschnittstelle (60) die Kommunikation des Engineering Tools (10) mit dem Feldgerät (30) ausführt.

9. System nach Anspruch 7, **dadurch gekennzeichnet, dass** zur Konfigurierung und/oder Parametrierung des Feldgerätes (30) mittels des Engineering Tools (10) die Gerätebeschreibung Electronic Device Description (EDD) vorgesehen ist, welche über eine als EDD- Interpreter ausgeführte Schnittstelle die Kommunikation des Engineering Tools (10) mit dem Feldgerät (30) ausführt.

10. Verfahren zur Integration von Feldgeräten (30) in ein Automatisierungssystem mit mehreren über eine Kommunikationsverbindung verbundener Feldgeräte (30) zur Steuerung und Überwachung einer technischen Anlage (20), wobei
- die Feldgeräte über jeweils eine Feldbusanschaltung (35) mit wenigstens einer übergeordneten Steuerung (40) verbunden werden,
- mittels der übergeordneten Steuerung (40) Befehle, Meldungen und/oder Diagnosedaten (D1) einem in der jeweiligen Feldbusanschaltung (35) vorhandenem Mikrocontroller (31) zyklisch bereitstellt werden, und
- mittels wenigstens einer Parametriersoftware (70) das jeweilige Feldgerät (30) konfiguriert und/oder parametriert wird und dabei die azyklisch übertragenen Daten (D2) der Parametriersoftware in einem dafür vorgesehenen Speicherabschnitt (A2) des Mikrocontrollers (31) abgelegt werden,
und dass mittels einer Datenspiegelung die Befehle, Meldungen und/oder Diagnosedaten (D1) der übergeordneten Steuerung (40) in den für die Daten der Parametriersoftware (D2) vorgesehenen Speicherabschnitt (A2) des Mikrocontrollers (31) übertragen werden.

11. Verfahren nach Anspruch 10 **dadurch gekennzeichnet, dass** für eine Beobachtung, Bedienung und/oder Diagnose des Feldgerätes (30) die im Speicherabschnitt (A2) des Mikrocontrollers (31) abgelegten Befehle, Meldungen und/oder Diagnosedaten (D1) der übergeordneten Steuerung (40) mittels der Parametriersoftware (70) ausgeführt werden.

12. Verfahren einem der Ansprüche 10 oder 11, **dadurch gekennzeichnet, dass** die Meldungen und/oder Diagnosedaten (D1) des Feldgerätes (30) jederzeit abgefragt werden.

13. Verfahren nach einem der Ansprüche 10 bis 12, **dadurch gekennzeichnet, dass** von der übergeordneten Steuerung (40) und/oder der Parametriersoftware (70) Freigabebefehle zur Abfrage der Meldungen und/oder Diagnosedaten (D1) des Feldgerätes (30) bereitgestellt werden.

14. Verfahren nach einem der Ansprüche 10 bis 13, **dadurch gekennzeichnet, dass** die Kommunikation der übergeordneten Steuerung (40) mit dem Feldgerät (30) mittels eines Feldbusprotokolls, insbesondere dem PROFIBUS oder dem ETHERNET, ausgeführt wird.

15. Verfahren nach einem der Ansprüche 10 bis 14, **dadurch gekennzeichnet, dass** mittels eines, insbesondere als Master Klasse 2 ausgeführtem, Engineering Tools (10) das Feldgerät (30) konfiguriert und/oder parametriert wird.

16. Verfahren nach Anspruch 15, **dadurch gekennzeichnet, dass** das Feldgerät (30) mittels der als Device Type Manager (DTM) ausgeführten Parametriersoftware (70) konfiguriert und/oder parametriert wird und mit dem Engineering Tool (10) über eine als Field Device Tool (FDT) ausgeführten Standardschnittstelle (60) kommuniziert.

17. Verfahren nach Anspruch 15, **dadurch gekennzeichnet, dass** das Feldgerätes (30) mittels einer als Electronic Device Description (EDD) ausgeführten Gerätebeschreibung konfiguriert und/oder parametriert wird und mit dem Engineering Tool (10) über eine als EDD- Interpreter ausgeführte Schnittstelle kommuniziert.

## Claims

1. A system for the integration of field devices (30) into an automation system comprising several field devices (30) for controlling and monitoring a technical installation (20), which field devices are connected via a communications link, with
- the field devices being connected via at least one field bus interface connection (35) each with at least one superordinate control unit (40);
- the superordinate control unit (40) being configured to provide in a cyclic manner commands, messages and/or diagnostic data (D1) to a microcontroller (31) present in the respective field bus interface connection (35), and
- at least one parameterization software (70) for configuration and/or parameterization of the respective field device (30) being configured to save the data (D2) of the parameterization software transmitted in an acyclic manner to a memory section (A2) of the microcontroller (31) provided for this purpose, and that the field bus interface connection (35) of the respective field device (30) is provided to transmit by means of data mirroring the commands, messages and/or diagnostic data (D1) of the superordinate control (40) to the memory section (A2) of the microcontroller (31) provided for the data of the parameterization software (D2).

2. A system according to claim 1, **characterized in that** the commands, messages and/or diagnostic data (D1) of the superordinate control unit (40) which are saved to the memory section (A2) of the microcontroller (31) are provided for monitoring, operating and/or diagnosing the field device (30) by means of the parameterization software (70).

3. A system according to claim 1 or 2, **characterized in that** the superordinate control unit (40) is arranged as a memory-programmable control system or process control system.

4. A system according to one of the preceding claims, **characterized in that** a query of the messages and/or diagnostic data (D1) of the field device (30) is provided at any time.

5. A system according to one of the preceding claims, **characterized in that** the superordinate control unit (40) and/or the parameterization software (70) provide release commands for querying the messages and/or diagnostic data (D1) of the field device (30).

6. A system according to one of the preceding claims, **characterized in that** the communication of the superordinate control unit (40) with the field device (30) can be performed by means of a field bus protocol, especially PROFIBUS or ETHERNET.

7. A system according to one of the preceding claims, **characterized in that** an engineering tool (10) is provided for the configuration and/or parameterization of the field device (30), which tool is arranged especially as a master class 2.

8. A system according to claim 7, **characterized in that** the software component Device Type Manager (DTM) is provided as a parameterization software (70) for the configuration and/or parameterization of the field device (30) by means of the engineering tool (10), which component performs the communication of the engineering tool (10) with the field device (30) via a standard interface (60) arranged as a Field Device Tool (FDT).

9. A system according to claim 7, **characterized in that** the device description Electronic Device Description (EDD) is provided for the configuration and/or parameterization of the field device (30) by means of the engineering tool (10), which device description carries out the communication of the engineering tool (10) with the field device (30) via an interface arranged as an EDD interpreter.

10. A method for the integration of field devices (30) into an automation system comprising several field devices (30) for controlling and monitoring a technical installation (20), which field devices are connected via a communications link, with
- the field devices being connected via at least one field bus interface connection (35) each with at least one superordinate control unit (40);
- commands, messages and/or diagnostic data (D1) being provided in a cyclic manner to a microcontroller (31) present in the respective field bus interface connection (35) by means of the superordinate control unit (40), and
- the respective field device (30) being configured and/or parameterized by means of at least one parameterization software (70) and the data (D2) of the parameterization software which is transmitted in an acyclic manner are saved to a memory section (A2) of the microcontroller (31) provided for this purpose, and that the commands, messages and/or diagnostic data (D1) of the superordinate control (40) are transmitted to the memory section (A2) of the microcontroller (31) provided for the data of the parameterization software (D2) by means of data mirroring.

11. A method according to claim 10, **characterized in that** the commands, messages and/or diagnostic data (D1) of the superordinate control (40) which are saved to the memory section (A2) of the microcontroller (31) are executed by means of the parameterization software (70) for monitoring, operating and/or diagnosing the field device (30).

12. A method according to one of the claims 10 or 11, **characterized in that** the messages and/or diagnostic data (D1) of the field device (30) are queried at any time.

13. A method according to one of the claims 10 to 12, **characterized in that** release commands for querying the messages and/or diagnostic data (D1) of the field device are provided by the superordinate control unit (40) and/or the parameterization software (70).

14. A method according to one of the claims 10 to 13, **characterized in that** the communication of the superordinate control unit (40) with the field device (30) is carried out by means of a field bus protocol, especially PROFIBUS or ETHERNET:

15. A method according to one of the claims 10 to 14, **characterized in that** the field device (30) is configured and/or parameterized by means of an engineering tool (10) arranged especially as a master class 2.

16. A method according to claim 15, **characterized in that** the field device (30) is configured and/or parameterized by means of the parameterization software (70) arranged as Device Type Manager (DTM) and communicates with the engineering tool (10) via a standard interface (60) arranged as a Field Tool Device (FDT).

17. A method according to claim 15, **characterized in that** the field device (30) is configured and/or parameterized by means of a device description arranged as an Electronic Device Description (EDD) and communicates with the engineering tool (10) via an interface arranged as an EDD interpreter.

## Revendications

1. Système d'intégration d'appareils de terrain (30) dans un système d'automatisation comprenant plusieurs appareils de terrain (30) qui sont reliés par une liaison de communication et destinés à effectuer la commande et la surveillance d'une installation technique (20), dans lequel
- les appareils de terrain sont reliés respectivement via une connexion de bus de terrain (35) à au moins une unité de commande (40) supérieure,
- l'unité de commande (40) supérieure est configurée pour fournir de manière cyclique des instructions, des messages et/ou des données de diagnostic (D1) à un microcontrôleur (31) prévu dans la connexion de bus de terrain (35) respective, et
- au moins un logiciel de paramétrage (70), destiné à la configuration et/ou au paramétrage de l'appareil de terrain (30) concerné, est configuré pour enregistrer les données (D2) acycliques transmises du logiciel de paramétrage dans
une section de mémoire (A2) prévue à cet effet dans le microcontrôleur (31), et la connexion de bus de terrain (35) de l'appareil de terrain (30) concerné est prévue pour transférer, à l'aide d'une écriture miroir de données, les instructions, les messages et/ou les données de diagnostic (D1) de l'unité de commande (40) supérieure dans la section de mémoire (A2) du microcontrôleur (31) qui est prévue pour les données du logiciel de paramétrage (D2).

2. Système selon la revendication 1, **caractérisé en ce que** les instructions, les messages et/ou les données de diagnostic (D1) de l'unité de commande (40) supérieure, qui sont enregistrés dans la section de mémoire (A2) du microcontrôleur (31), sont prévus pour effectuer l'observation, la conduite et/ou le diagnostic de l'appareil de terrain (30) à l'aide du logiciel de paramétrage (70).

3. Système selon la revendication 1 ou 2, **caractérisé en ce que** l'unité de commande (40) supérieure est réalisée sous forme de système de commande par programme enregistré ou de système de contrôle de processus industriel.

4. Système selon une des revendications précédentes, **caractérisé en ce qu'**il est prévu à tout instant d'effectuer une interrogation pour connaître les messages et/ou les données de diagnostic (D1) de l'appareil de terrain (30).

5. Système selon une des revendications précédentes, **caractérisé en ce que** l'unité de commande (40) supérieure et/ou le logiciel de paramétrage (70) fournissent des instructions d'autorisation pour demander les messages et/ou les données de diagnostic (D1) de l'appareil de terrain (30).

6. Système selon une des revendications précédentes, **caractérisé en ce que** la communication de l'unité de commande (40) supérieure avec l'appareil de terrain (30) peut être mise en oeuvre à l'aide d'un protocole de bus de terrain, en particulier PROFIBUS ou ETHERNET.

7. Système selon une des revendications précédentes, **caractérisé en ce que** pour effectuer la configuration et/ou le paramétrage de l'appareil de terrain (30), il est prévu un outil d'ingénierie (10) qui se présente notamment comme "Master Class 2".

8. Système selon la revendication 7, **caractérisé en ce que** pour effectuer la configuration et/ou le paramétrage de l'appareil de terrain (30) à l'aide de l'outil d'ingénierie (10), il est prévu, en tant que logiciel de paramétrage (70), la composante de logiciel Device Type Manager (DTM) qui réalise la communication de l'outil d'ingénierie (10) avec l'appareil de terrain (30), par l'intermédiaire d'une interface standard (60) conçue comme Field Device Tool (FDT).

9. Système selon la revendication 7, **caractérisé en ce que** pour effectuer la configuration et/ou le paramétrage de l'appareil de terrain (30) à l'aide de l'outil d'ingénierie (10), il est prévu la description d'appareil Electronic Device Description (EDD) qui réalise la communication entre l'outil d'ingénierie (10) et l'appareil de terrain (30), par l'intermédiaire d'une interface conçue comme interpréteur EDD.

10. Procédé d'intégration d'appareils de terrain (30) dans un système d'automatisation comprenant plusieurs appareils de terrain (30) qui sont reliés par une liaison de communication et destinés à effectuer la commande et la surveillance d'une installation technique (20), dans lequel
- les appareils de terrain sont reliés respectivement via une connexion de bus de terrain (35) à au moins une unité de commande (40) supérieure,
- l'unité de commande (40) supérieure permet de fournir de manière cyclique des instructions, des messages et/ou des données de diagnostic (D1) à un microcontrôleur (31) prévu dans la connexion de bus de terrain (35) respective, et
- au moins un logiciel de paramétrage (70) permet de configurer et/ou de paramétrer l'appareil de terrain (30) concerné, opération au cours de laquelle les données (D2) du logiciel de paramétrage, transmises de manière acyclique, sont enregistrées dans une section de mémoire (A2) du microcontrôleur (31) prévue à cet effet,
et une écriture miroir de données permet de transmettre les instructions, les messages et/ou les données de diagnostic (D1) de l'unité de commande (40) supérieure dans la section de mémoire (A2) du microcontrôleur (31), qui est prévue pour les données du logiciel de paramétrage (D2).

11. Procédé selon la revendication 10, **caractérisé en ce que** pour effectuer l'observation, la conduite et/ou le diagnostic de l'appareil de terrain (30), les instructions, les messages et/ou les données de diagnostic (D1) de l'unité de commande (40) supérieure, qui sont enregistrés dans la section de mémoire (A2) du microcontrôleur (31), sont exécutés au moyen du logiciel de paramétrage (70).

12. Procédé selon une des revendications 10 ou 11, **caractérisé en ce que** les messages et/ou les données de diagnostic (D1) de l'appareil de terrain (30) sont demandés à tout instant.

13. Procédé selon une des revendications 10 à 12, **caractérisé en ce que** l'unité de commande (40) supérieure et/ou le logiciel de paramétrage (70) émettent des instructions d'autorisation pour demander les messages et/ou les données de diagnostic (D1) de l'appareil de terrain (30).

14. Procédé selon une des revendications 10 à 13, **caractérisé en ce que** la communication de l'unité de commande (40) supérieure avec l'appareil de terrain (30) est réalisée à l'aide d'un protocole de bus de terrain, en particulier PROFIBUS ou ETHERNET.

15. Procédé selon une des revendications 10 à 14, **caractérisé en ce que** l'appareil de terrain (30) est configuré et/ou paramétré à l'aide d'un outil d'ingénierie (10) qui est réalisé notamment sous forme de "Master Class 2".

16. Procédé selon la revendication 15, **caractérisé en ce que** l'appareil de terrain (30) est configuré et/ou paramétré à l'aide du logiciel de paramétrage (70), conçu en tant que Device Type Manager (DTM), et communique avec l'outil d'ingénierie (10) par l'intermédiaire d'une interface standard (60) réalisée sous forme de Field Device Tool (FDT).

17. Procédé selon la revendication 15, **caractérisé en ce que** l'appareil de terrain (30) est configuré et/ou paramétré à l'aide d'une description d'appareil conçue comme EDD (Electronic Device Description) et communique avec l'outil d'ingénierie (10) par l'intermédiaire d'une interface conçue comme interpréteur EDD.
